(19) **Europäisches Patentamt**

**European Patent Office**

**Office européen des brevets**

(11) Publication number: **0 500 115 B1**

(12) **EUROPEAN PATENT SPECIFICATION**

(45) Date of publication of patent specification: **07.12.94** (51) Int. Cl.5: **C09D 183/04**, C08J 7/04

(21) Application number: **92102882.5**

(22) Date of filing: **20.02.92**

(54) **Silicone primer.**

---

(30) Priority: **21.02.91 US 658725**

(43) Date of publication of application:
**26.08.92 Bulletin 92/35**

(45) Publication of the grant of the patent:
**07.12.94 Bulletin 94/49**

(84) Designated Contracting States:
**DE FR GB**

(56) References cited:
**EP-A- 0 164 879**
**EP-A- 0 220 733**
**US-A- 3 799 838**
**US-A- 4 501 682**
**US-A- 4 689 085**

**WORLD PATENTS INDEX LATEST Derwent**
**Publications Ltd., London, GB; AN 83-805447;**
**& JP-A-820 044 217**

---

(73) Proprietor: **DOW CORNING CORPORATION**
**P.O. Box 1767**
**Midland Michigan 48686-0994 (US)**

(72) Inventor: **Berg, Daniel Trent**
**307 South Henry**
**Bay City, Michigan (US)**
Inventor: **O'Brien, William Robert**
**5604 Woodview Pass**
**Midland, Michigan (US)**

(74) Representative: **Spott, Gottfried, Dr. et al**
**Spott Weinmiller & Partner**
**Sendlinger-Tor-Platz 11**
**D-80336 München (DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention relates to cleaning and priming substrates for use with sealants and coatings.

The problem of obtaining good adhesion between room temperature vulcanizing silicone sealants and various substrates has existed since their invention.

A primer composition according to this invention which is useful with a variety of substrates and a variety of sealants and coatings, particularly with different types of silicone room temperature curing sealants and coatings, is obtained when a mixture is prepared from volatile silicone linear or cyclic polymers or oligomers in combination with silicates, titanates, alkoxysilanes or mixtures of these.

This invention relates to a composition comprising (A) from 70 to 99 parts by weight of polydiorganosiloxane selected from the group consisting of linear polymers of the formula $R_3SiO(R_2SiO)_xSiR_3$ and cyclic polymers of the formula $(R_2SiO)_y$, where R is a monovalent hydrocarbon or halogenated hydrocarbon radical of 1 to 6 carbon atoms, x is such that the viscosity is from 10 to 50 centistokes at 25°C. and y is 4 or 5, and (B) from 1 to 30 parts by weight of reactive compound selected from the group consisting of silanes and silicates of the formula $R_nSi(OZ)_{4-n}$, where R is a monovalent hydrocarbon or substituted hydrocarbon of from 1 to 4 carbon atoms or phenyl, Z is independently an acyl radical of less than 4 carbon atoms, R or R''OR, where R'' is ethylene or propylene and n is 0 to 3; and titanate of the formula Ti-$(OR')_4$ where R' is a monovalent radical selected from the group consisting of alkyl radical having from 1 to 5 carbon atoms and the acetylacetonyl radical, the composition not containing volatile organic solvents.

Sealants and coatings based upon polydiorganosiloxane as the polymer have been developed for many uses. The inherent weatherability and heat stability of the polydiorganosiloxane has been used to produce sealants and coatings which have a longer useful life than competing products. These compositions have been developed in many varieties, using different cure systems and different filler systems, in order to produce sealants and coatings which have the best combination of properties for a particular application.

Experience with these differing types of sealants and coatings, as well as with organic based sealants and coatings, has shown that the bonding results obtained are variable, depending upon the choice of sealant or coating and upon the choice of substrate to which they are bonded. In order to increase the number of substrates to which a sealant or coating would bond or to increase the strength of the bond, a number of primers have been developed. In order to obtain the best bond, the substrate is first cleaned, usually by scrubbing with an organic solvent to remove any grease and/or oil which may be present, as well as other types of dirt. These primers are applied to the cleaned substrate, then the sealant or coating is applied over the primer. In any case, the substrate must first be cleaned thoroughly in order to assure that there is nothing on the surface which would interfere with obtaining a good bond. The primers are usually dilute solutions of reactive ingredients. The substrate is cleaned, then coated with the primer and the solvent is allowed to evaporate, leaving a coating of primer adhered to the substrate. The sealant or coating is then applied and cured to give a strong bond between the sealant or coating and the substrate. At times it is the bond which remains after subjecting the constructions to adverse environmental effects that is really important. For example, some combinations provide a good bond in the as cured state, but lose bond strength when subjected to water immersion for long periods of time or at elevated temperature.

The composition of this invention has been found to be useful in cleaning and priming substrates in a single step. The composition has been shown to give bond adhesion with a greater variety of substrates and with a greater variety of sealants than other primers or cleaners.

From 70 to 99 parts by weight of the composition per 100 parts of composition is a polydiorganosiloxane selected from either linear or cyclic polymer or mixtures. The linear polymer is of the formula $R_3SiO-(R_2SiO)_xSiR_3$, where R is a monovalent hydrocarbon or halogenated hydrocarbon radical of 1 to 6 carbon atoms and x is such that the viscosity is from 10 to 50 centistokes at 25°C. The cyclic polymer is of the formula $(R_2SiO)_y$ and y is 4 or 5. These polydiorganosiloxanes are of such a size that, in many cases, they are not considered to be volatile organic materials, but they are also of such a size that, in many cases, they can be used as a solvent in that a surface can be cleaned with a rag moistened with the fluid and then the fluid can be allowed to evaporate, leaving only a thin film of polymer on the surface. When it is desired to use the composition with an organic sealant or coating, use of the lower viscosity polydiorganosiloxane is preferred. It is even possible to use polydiorganosiloxane having a viscosity of less than 10 centistokes in such cases, but these lower viscosity polydiorganosiloxanes may be considered to fall under the designation of volatile organic compounds. When the composition of this invention is used with silicone sealants and coatings, it is possible, and in many cases desirable, to use polydiorganosiloxanes at the upper end of the viscosity range. When the sealant or coating is silicone based, it is even possible to use viscosities which are higher than 50 centistokes, but it is believed that an upper limit of 50 centistokes is correct in most cases. Examples of the monovalent hydrocarbon or halogenated hydrocarbon radical of 1 to 6 carbon atoms found in these polymers are alkyl groups such as methyl, ethyl, propyl and hexyl; alkenyl groups such as vinyl, allyl and hexenyl; aryl groups such as phenyl; and halogenated alkyl such as trifluoropropyl. The preferred polydiorganosiloxanes are those in which at least a majority of the organic radicals are methyl radicals, since these are the least costly. Preferred are trimethylsiloxy endblocked polydimethylsiloxane having a viscosity of from 10 to 50 centistokes at 25°C., octamethylcyclotetrasiloxane and decamethylcyclopentasiloxane.

The composition of this invention also includes from 1 to 30 parts by weight per 100 parts by weight of the composition of a reactive compound to increase the bonding. The bonding compound can be any of those known to improve the bonding of a sealant or coating to a substrate. Preferred are reactive compounds selected from the group consisting of silanes and silicates of the formula $R_nSi(OZ)_{4-n}$, where R is a monovalent hydrocarbon or substituted hydrocarbon of from 1 to 4 carbon atoms or phenyl, Z is independently an acyl radical of less than 4 carbon atoms, R or R''OR, where R'' is ethylene or propylene and n is 0 to 3; and titanates of the formula $Ti(OR')_4$ where R' is a monovalent radical selected from the group consisting of alkyl radical having from 1 to 5 carbon atoms and the acetylacetonyl radical. R can be such radicals as methyl, ethyl, propyl, isopropyl vinyl and phenyl. Z can be formyl, acetyl or propionyl. When n is 2, the silane is a dialkyldialkoxysilane, such as vinylmethyldimethoxysilane. When n is 1 the silane is usually known as an alkyltriacyloxysilane or alkyltrialkoxysilane. When n is 0 the silane is usually known as a tetraalkoxysilane or as an orthosilicate. Preferred silanes include methyltriacetoxysilane, ethyltriacetoxysilane, methoxytriacetoxysilane, methyltrimethoxysilane, ethyltrimethoxysilane, vinyltrimethoxysilane, 3,3,3-trifluoropropyltrimethoxysilane, methyltriethoxysilane and mercaptopropyltrimethoxysilane.

The silicates include polyethylsilicate, polypropylsilicate, ethylorthosilicate, n-propylorthosilicate, isopropylorthosilicate and methoxyethoxyorthosilicate.

The titanates are of the formula $Ti(OR')_4$ where R' is a monovalent radical selected from the group consisting of alkyl radicals having from 1 to 5 carbon atoms and the acetylacetonyl radical. Examples of titanates include tetraisopropyltitanate, tetrabutyltitanate, tetra-n-propyltitanate, tetrakis(2-ethylhexyl)titanate, dibutyldiisopropyltitanate, diisopropylbis(acetyacetonyl)titanate and titanium acetylacetonate.

The 1 to 30 parts by weight of reactive compound can consist of one silane or titanate or any mixture of silanes and titanates. Since these materials are reactive with moisture, it is commonly found that partially hydrolyzed materials are present and it has been found that partial hydrolyzates of the silanes and/or titanates can also be used in the reactive compound of this invention. A preferred reactive compound is one in which the reactive compound is a mixture of equal parts of n-propylorthosilicate, methoxyethoxyorthosilicate and tetrabutyltitanate.

In the following examples, parts are parts by weight.

Example 1

A primer composition (A) was prepared by mixing, under anhydrous conditions, 85 parts of a trimethylsilyl endblocked polydimethylsiloxane fluid having a viscosity of 10 centistokes ($10^{-5}$ $m^2/sec$), 5 parts of n-propylorthosilicate, 5 parts of methoxyethoxyorthosilicate and 5 parts of tetrabutyltitanate.

A primer composition (B) was prepared by first mixing 0.4 part of mercaptopropyltrimethoxysilane, 0.6 part of tetrabutyltitanate and 2 parts of 2,5-di-isopropoxy-bis-ethylacetoacetate titanate, then mixing 10 parts of this mixture with 50 parts of trimethylsilyl endblocked polydimethylsiloxane fluid having a viscosity of 50 centistokes (5 x $10^{-5}$ $m^2/sec$.)

A comparative primer composition (C) was prepared in the same manner as primer composition (A), except the polydimethylsiloxane was replaced with VM&P Naptha.

An unprimed surface was prepared by cleaning with xylene by wetting a rag with xylene and rubbing the surface vigorously, then drying with another clean rag. The surface cleaned with xylene, without any primer is shown as a comparative example.

The surface was also cleaned with a trimethylsilyl endblocked polydimethylsiloxane having a viscosity of 10 centistokes used in place of the xylene in the process described above. The result is shown as a comparative example.

Each of the primer compositions were applied to the substrates in the same manner.

After the prepared substrates had dried, a variety of silicone sealants were applied to the substrate as a bead and allowed to cure for 7 days at room conditions. The end of each bead was then cut from the substrate with a razor for use as a tab. The tab was then pulled from the substrate at an angle of about 180 degrees. The amount of adhesion of the sealant to the substrate was then evaluated by observing the surface of the substrate. If there was no sealant left on the substrate, the sealant had failed adhesively. If there was sealant still adhered to the substrate, the sealant itself rupturing, the failure was cohesive. The test results in Table I show the percent of the substrate surface which showed cohesive failure. No failure of the bond between the sealant and the substrate would be 100 percent cohesive.

A wide variety of substrates were selected to represent the various types of substrates used with silicone sealants. The substrates used were 1 white marble, 2 precast concrete, 3 clear anodized aluminum, 4 bronze anodized aluminum, 5 polyvinylchloride sheet, 6 acrylic sheet and 7 float glass.

## Table I

(A) Sealant used was a non-slump silicone sealant cured by the reaction of alkoxy functional silane in the presence of moisture with a titanate catalyst.
Tested after cure

| Cleaner/primer | A | B | C* | Xylene* | PDMS* |
|---|---|---|---|---|---|
| | percent cohesive failure | | | | |
| Substrate | | | | | |
| 1 White Marble | 100 | 100 | 100 | 0 | 0 |
| 2 Concrete | 100 | 100 | 100 | 0 | 100 |
| 3 Aluminum, clear | 100 | 100 | 100 | 0 | 100 |
| 4 Aluminum, bronze | 100 | 100 | 100 | 20 | 100 |
| 5 PVC | 100 | 100 | 100 | 100 | 0 |
| 6 Acrylic | 100 | 100 | 100 | 100 | 100 |
| 7 Glass | 100 | 100 | 100 | 100 | 100 |

Tested after immersion in water for 7 days

| Cleaner/primer | A | B | C* | Xylene* | PDMS* |
|---|---|---|---|---|---|
| | percent cohesive failure | | | | |
| Substrate | | | | | |
| 1 White Marble | 10 | 0 | 0 | 0 | 0 |
| 2 Concrete | 40 | 0 | 20 | 0 | 0 |
| 3 Aluminum, clear | 100 | 100 | 100 | 0 | 100 |
| 4 Aluminum, bronze | 100 | 100 | 100 | 0 | 100 |
| 5 PVC | 100 | 100 | 100 | 100 | 0 |
| 6 Acrylic | 100 | 100 | 100 | 100 | 100 |
| 7 Glass | 100 | 100 | 100 | 100 | 100 |

* comparative example

(B) This sealant was a non-slump silicone sealant cured through the reaction of amido and aminoxy functional groups in the presence of moisture.
Tested after cure

| Cleaner/primer | A | B | C* | Xylene* | PDMS* |
|---|---|---|---|---|---|
| | percent cohesive failure | | | | |
| Substrate | | | | | |
| 1 White Marble | 100 | 0 | 100 | 0 | 0 |
| 2 Concrete | 100 | 100 | 100 | 0 | 100 |
| 3 Aluminum, clear | 100 | 100 | 100 | 0 | 100 |
| 4 Aluminum, bronze | 100 | 100 | 100 | 0 | 50 |
| 5 PVC | 100 | 100 | 100 | 50 | 0 |
| 6 Acrylic | 100 | 100 | 100 | 100 | 0 |
| 7 Glass | 100 | 100 | 100 | 100 | 100 |

Tested after immersion in water for 7 days

| Cleaner/primer | A | B | C* | Xylene* | PDMS* |
|---|---|---|---|---|---|
| | percent cohesive failure | | | | |
| Substrate | | | | | |
| 1 White Marble | 0 | 0 | 0 | 0 | 0 |
| 2 Concrete | 40 | 0 | 100 | 0 | 0 |
| 3 Aluminum, clear | 100 | 0 | 100 | 0 | 100 |
| 4 Aluminum, bronze | 100 | 100 | 100 | 0 | 10 |
| 5 PVC | 100 | 100 | 100 | 100 | 0 |
| 6 Acrylic | 100 | 100 | 100 | 100 | 0 |
| 7 Glass | 100 | 100 | 100 | 100 | 100 |

(C)   This sealant was a non-slump silicone sealant cured through the reaction of oxime functional groups with a tin catalyst in the presence of moisture.

Tested after cure

| Cleaner/primer | A | B | C* | Xylene* | PDMS* |
|---|---|---|---|---|---|
| | percent cohesive failure | | | | |
| Substrate | | | | | |
| 1 White Marble | 0 | 0 | 0 | 0 | 0 |
| 2 Concrete | 0 | 0 | 30 | 0 | 20 |
| 3 Aluminum, clear | 100 | 100 | 100 | 0 | 100 |
| 4 Aluminum, bronze | 100 | 100 | 100 | 0 | 100 |
| 5 PVC | 100 | 100 | 100 | 50 | 100 |
| 6 Acrylic | 100 | 100 | 100 | 100 | 0 |
| 7 Glass | 100 | 100 | 100 | 100 | 100 |

Tested after immersion in water for 7 days

| Cleaner/primer | A | B | C* | Xylene* | PDMS* |
|---|---|---|---|---|---|
| | percent cohesive failure | | | | |
| Substrate | | | | | |
| 1 White Marble | 0 | 0 | 0 | 0 | 0 |
| 2 Concrete | 0 | 0 | 30 | 0 | 0 |
| 3 Aluminum, clear | 100 | 100 | 100 | 0 | 100 |
| 4 Aluminum, bronze | 100 | 100 | 100 | 0 | 50 |
| 5 PVC | 100 | 100 | 100 | 50 | 0 |
| 6 Acrylic | 100 | 100 | 100 | 100 | 0 |
| 7 Glass | 100 | 100 | 100 | 100 | 0 |

(D)   This sealant was a water-based, non-slump silicone sealant obtained by mixing an anionic emulsion of hydroxyl endblocked polydimethylsiloxane, tin catalyst, trialkoxysilane and calcium carbonate filler; the sealant curing upon evaporation of the water.

Tested after cure

| Cleaner/primer | A | B | C* | Xylene* | PDMS* |
|---|---|---|---|---|---|
| | percent cohesive failure | | | | |
| Substrate | | | | | |
| 1 White Marble | 0 | 0 | 0 | 0 | 0 |
| 2 Concrete | 0 | 0 | 0 | 0 | 0 |
| 3 Aluminum, clear | 50 | 0 | 80 | 0 | 0 |
| 4 Aluminum, bronze | 100 | 0 | 100 | 0 | 0 |
| 5 PVC | 100 | 100 | 100 | 0 | 0 |
| 6 Acrylic | 100 | 100 | 100 | 0 | 0 |
| 7 Glass | 100 | 100 | 100 | 100 | 100 |

Tested after immersion in water for 7 days

| Cleaner/primer | A | B | C* | Xylene* | PDMS* |
|---|---|---|---|---|---|
| | percent cohesive failure | | | | |
| Substrate | | | | | |
| 1 White Marble | 0 | 0 | 0 | 0 | 0 |
| 2 Concrete | 0 | 0 | 0 | 0 | 0 |
| 3 Aluminum, clear | 0 | 0 | 0 | 0 | 0 |
| 4 Aluminum, bronze | 0 | 10 | 0 | 0 | 0 |
| 5 PVC | 100 | 20 | 0 | 0 | 0 |
| 6 Acrylic | 100 | 100 | 10 | 0 | 0 |
| 7 Glass | 100 | 100 | 100 | 100 | 100 |

(E)  This sealant was a non-slump silicone sealant cured through the reaction of acetoxy functional groups with a tin catalyst in the presence of moisture.

Tested after cure

| Cleaner/primer | A | B | C* | Xylene* | PDMS* |
|---|---|---|---|---|---|
| | percent cohesive failure | | | | |
| Substrate | | | | | |
| 1 White Marble | - | - | - | - | 0 |
| 2 Concrete | 100 | 100 | 0 | 0 | 0 |
| 3 Aluminum, clear | 100 | 100 | 100 | 100 | 100 |
| 4 Aluminum, bronze | 100 | 100 | 100 | 0 | 0 |
| 5 PVC | 0 | 100 | 0 | 0 | 0 |
| 6 Acrylic | 100 | 100 | 100 | 100 | 0 |
| 7 Glass | 100 | 100 | 100 | 100 | 100 |

Tested after immersion in water for 7 days

| Cleaner/primer | A | B | C* | Xylene* | PDMS* |
|---|---|---|---|---|---|
| | percent cohesive failure | | | | |
| Substrate | | | | | |
| 1 White Marble | - | - | - | - | 0 |
| 2 Concrete | 0 | 0 | 0 | 0 | 0 |
| 3 Aluminum, clear | 100 | 100 | 20 | 0 | 100 |
| 4 Aluminum, bronze | 100 | 10 | 100 | 0 | 0 |
| 5 PVC | 100 | 10 | 100 | 0 | 0 |
| 6 Acrylic | 60 | 100 | 100 | 100 | 0 |
| 7 Glass | 100 | 0 | 100 | 100 | 100 |

* comparative example

## Example 2

A series of primer compositions were prepared using different concentrations of active ingredients for evaluation as to their effectiveness in cleaning and priming surfaces to increase bonding of a silicone sealant. The sealant was a mixture of alkoxy functional polydimethylsiloxane, fumed silica filler, methyltrimethoxysilane crosslinker, 3-mercaptopropyltrimethoxysilane adhesion additive and titanate catalyst.

The primer compositions were mixtures of trimethylsilyl endblocked polydimethylsiloxane (PDMS) having a viscosity of about 50 cs. at 25°C., 3-mercaptopropyltrimethoxysilane (MPTM), 2,5-di-isopropoxy-bis-ethylacetoacetate titanate (DIBET) and tetrabutyltitanate (TBT) in the amounts shown in Table II.

Table II

| Ingredient | Composition | | |
|---|---|---|---|
| | A | B | C |
| PDMS | 90 | 80 | 70 |
| MPTM | 1.2 | 2.4 | 3.6 |
| DIBET | 6.7 | 13.3 | 20 |
| TBT | 2.1 | 4.3 | 6.4 |

Samples of Duranar (Tradename for PPG brand of trifluorocarbon based coating. One used was silver in color) and granite were scrubbed with a rag moistened with the composition shown in Table III. After allowing time for drying, the sealant described above was applied to the surfaces in a bead, which was allowed to cure for 7 days at room conditions. A tab was then cut into the end of the bead and the bead pulled away from the surface as described in Example 1. The amount of cohesive failure found in each case is shown in Table III.

Table III

| Cleaning Material | Substrate | |
|---|---|---|
| | Duranar | Granite |
| Dry Rag* | 0 | 20 |
| Xylene* | 0 | 0 |
| Isopropyl Alcohol* | 0 | 0 |
| PDMS* | 0 | 100 |
| Composition A | 100 | 100 |
| Composition B | 100 | 100 |
| Composition C | 90 | 100 |

* comparative material

## Example 3

A series of compositions were prepared as in composition A of Example 1, but using higher amounts of a polydimethylsiloxane having a viscosity of 10 centistokes at 25°C. as shown in Table IV.

Table IV

| | Composition | |
|---|---|---|
| | A | B |
| PDMS, 10 centistoke | 92.5 | 98.77 |
| n-propylorthosilicate | 2.5 | 0.41 |
| methoxyethoxyorthosilicate | 2.5 | 0.41 |
| tetrabutyltitanate | 2.5 | 0.41 |

Each of these compositions was applied to the substrates of Example 1 as shown in Table V by wiping onto the substrate with a wetted rag, wiping off and letting dry. The sealants described in Example 1 were then applied to the treated substrates, allowed to cure and tested for adhesion, all as in Example 1. The results are shown in Table V.

7

## Table V

| Sealant Substrate | A | B | C | D | E |
|---|---|---|---|---|---|
| 2. Concrete | | | | | |
|    Comp A | 100 | 100 | 0 | 0 | 100 |
|    Comp B | 100 | 100 | 80 | 0 | 100 |
| 3. Aluminum, clear | | | | | |
|    Comp A | 100 | 100 | 100 | 100 | 100 |
|    Comp B | 100 | 100 | 100 | 100 | 100 |
| 4. Aluminum, bronze | | | | | |
|    Comp A | 100 | 100 | 100 | 100 | 100 |
|    Comp B | 100 | 100 | 100 | 100 | 100 |
| 5. PVC | | | | | |
|    Comp A | 100 | 100 | 100 | 0 | 0 |
|    Comp B | 100 | 0 | 100 | 0 | 0 |
| 6. Acrylic | | | | | |
|    Comp A | 100 | 0 | 100 | 0 | 100 |
|    Comp B | 100 | 0 | 100 | 0 | 100 |

**Claims**

1. A composition comprising (A) from 70 to 99 parts by weight of polydiorganosiloxane selected from the group consisting of linear polymers of the formula $R_3SiO(R_2SiO)_xSiR_3$ and cyclic polymers of the formula $(R_2SiO)_y$, where R is a monovalent hydrocarbon or halogenated hydrocarbon radical of 1 to 6 carbon atoms, x is such that the viscosity is from $10^{-5}$ to $5.10^{-5}$ m$^2$/sec (10 to 50 centistokes) at 25 °C. and y is 4 or 5, and (B) from 1 to 30 parts by weight of reactive compound selected from the group consisting of silanes and silicates of the formula $R_nSi(OZ)_{4-n}$, where R is a monovalent hydrocarbon or substituted hydrocarbon of from 1 to 4 carbon atoms or phenyl, Z is an acyl radical of less than 4 carbon atoms, R or R''OR where R'' is ethylene or propylene and n is 0 to 3; and titanate of the formula $Ti(OR')_4$ where R' is a monovalent radical selected from the group consisting of alkyl radical having from 1 to 5 carbon atoms and the acetylacetonyl radical, the composition not containing volatile organic solvents.

2. A method of bonding a sealant or coating to a substrate consisting of cleaning and priming the substrate by applying to the substrate the composition of claim 1, then applying the sealant or coating over the film left by the application of the composition.

**Patentansprüche**

1. Zusammensetzung umfassend
   (A) 70 bis 99 Gewichtsteile eines Polydiorganosiloxans ausgewählt aus der Gruppe bestehend aus linearen Polymeren der Fomel $R_3SiO(R_2SiO)_xSiR_3$ und cyclischen Polymeren der Formel $(R_2SiO)_y$, worin R ein monovalenter Kohlenwasserstoff- oder halogenierter Kohlenwasserstoffrest mit 1 bis 6 Kohlenstoffatomen ist, x so ist, daß die Viskosität $10^{-5}$ bis $5 \times 10^{-5}$ m$^2$/s (10 bis 50 Centistoke) bei 25 °C ist und y 4 oder 5 ist und
   (B) 1 bis 30 Gewichtsteile einer reaktiven Verbindung ausgewählt aus der Gruppe bestehend aus Silanen und Silicaten der Formel $R_nSi(OZ)_{4-n}$, worin R ein monovalenter Kohlenwasserstoff- oder substituierter Kohlenwasserstoffrest mit 1 bis 4 Kohlenstoffatomen oder ein Phenylrest ist, Z ein Acylrest mit weniger als 4 Kohlenstoffatomen, R oder R''OR ist, worin R'' ein Ethylen- oder Propylenrest ist, und n 0 bis 3 ist und ein Titanat der Formel $Ti(OR')_4$, worin R' ein monovalenter Rest ist ausgewählt aus der Gruppe bestehend aus Alkylresten mit 1 bis 5 Kohlenstoffatomen und dem Acetylacetonylrest, wobei die Zusammensetzung keine flüchtigen organischen Lösungsmittel enthält.

**2.** Verfahren zum Verbinden eines Dichtungsmittels oder einer Beschichtung mit einem Substrat, das daraus besteht, daß man das Substrat reinigt und grundiert, indem man auf das Substrat die Zusammensetzung von Anspruch 1 aufträgt, dann das Dichtungsmittel oder die Beschichtung über den nach Auftragen der Zusammensetzung zurückbleibenden Film aufträgt.

**Revendications**

**1.** Une composition comprenant (A) de 70 à 99 parties en poids de polydiorganosiloxane choisi parmi le groupe composé de polymères linéaires de la formule $R_3SiO(R_2SiO)_xSiR_3$ et de polymères cycliques de la formule $(R_2SiO)_y$ où R est un radical d'hydrocarbure ou d'hydrocarbure halogéné monovalent ayant de 1 à 6 atomes de carbone, x est tel que la viscosité est comprise entre $10^{-5}$ et $5.10^{-5}$ m$^2$/s. (10 à 50 centistokes) à 25° C et y est 4 ou 5, et (B) de 1 à 30 parties en poids d'un composé réactif choisi parmi le groupe composé de silanes et de silicates de la formule $R_nSi(OZ)_{4-n}$, où R est un radial d'hydrocarbure ou un hydrocarbure substitué monovalent ayant de 1 à 4 atomes de carbone ou phényle, Z est un radical acyle de moins de 4 atomes de carbone, R ou R''OR où R'' est un radial d'éthylène ou propylène et n est 0 à 3 ; et des titanates de la formule $Ti(OR')_4$ où R' est un radical monovalent choisi parmi le groupe composé d'un radical alkyle ayant de 1 à 5 atomes de carbone et du radical acétylacétonyle, la composition ne contenant pas de solvants organiques volatiles.

**2.** Un procédé de liaison d'un produit d'étanchéité ou d'un revêtement à un substrat consistant à nettoyer et à apprêter le substrat en appliquant sur le substrat la composition de la revendication 1, puis à appliquer le produit d'étanchéité ou le revêtement sur la pellicule laissée par l'application de la composition.